Europäisches Patentamt

European Patent Office

Office européen des brevets

(19)

(11) Publication number: **0 260 805 B1**

# EUROPEAN PATENT SPECIFICATION

(12)

(45) Date of publication of patent specification: **10.04.91**  (51) Int. Cl.<sup>5</sup>: **B60T 15/04**

(21) Application number: **87307053.6**

(22) Date of filing: **07.08.87**

(54) **Improvements relating to fluid pressure control valves.**

(30) Priority: **09.08.86 GB 8619490**

(43) Date of publication of application:
**23.03.88 Bulletin 88/12**

(45) Publication of the grant of the patent:
**10.04.91 Bulletin 91/15**

(84) Designated Contracting States:
**BE DE ES FR IT NL SE**

(56) References cited:
**EP-A- 0 113 179**
**GB-A- 2 158 534**

(73) Proprietor: **BENDIX LIMITED**
**Douglas Road**
**Kingswood, Bristol BS15 2NL(GB)**

(72) Inventor: **Fogg, Stephen Walter**
**37 Milmead Road**
**Bath BA2 3JP(GB)**

(74) Representative: **Turner, Alan Reginald**
**BENDIX LIMITED Douglas Road**
**Kingswood, Bristol BS15 2NL(GB)**

## Description

This invention relates to fluid pressure control valves and relates especially but not exclusively to dual pressure control valves for vehicle compressed air braking systems, according to the preamble of Claim 1. A device of this kind is disclosed in GB-A-2.158.534.

In vehicle compressed air braking systems it is usual to provide two independent service brake control circuits for brakes on the same or different axles on a vehicle. These independent circuits are fed from separate compressed air reservoirs via pneumatically separate portions of a dual pressure control valve operable by a driver's brake pedal. A typical such valve comprises a pedal operated plunger which acts through a spring on one side of a piston the other side of which piston is subject to air pressure delivered to a first compressed air brake circuit via a self-lapping valve which is controlled by the piston. The delivered pressure typically also acts on one side of a further piston which controls a further self-lapping valve for supplying fluid pressure to a second brake circuit.

In order to meet progressively more exacting performance requirements for compressed air braking systems it has been found that there are often conflicting requirements imposed upon the compressed air control valve. For example, on the one hand a large amount of free movement of the plunger, before the first mentioned self-lapping valve closes its exhaust valve and opens its inlet valve, is unacceptable whereas on the other hand substantial exhaust seat openings are nevertheless desirable to minimise air venting restrtiction for ensuring rapid response to driver pedal pressure variations.

The present invention has an object to overcome or reduce the conflict between requirements such as the foregoing.

According to the present invention there is provided a fluid pressure control valve comprising a body housing a pressure responsive member sealingly moveable therein for operating a lappable double valve arrangement, alternatively displaceable from a lap position for connecting an output port to a supply port or a vent port, said pressure responsive member being subject on one side to fluid pressure at the output port acting in a sense to vent said pressure and to urge said member towards a stop and being subject to an input force acting in an opposing sense to tend to connect the output port to the supply port and characterised in that said stop is resiliently deflectable beyond a normal stop position following removal of the input force thereby temporarily permitting said member to increase the vent opening through said valve.

In order that the present invention may be more clearly understoodand readily carried into effect, the same will be further described by way of example with reference to the accompanying drawing of which:

Fig. 1     illustrates a dual circuit compressed air brake pressure control valve device and,

Fig. 2     illustrates a resilient deflectable stop member employed in the valve device of Fig. 1.

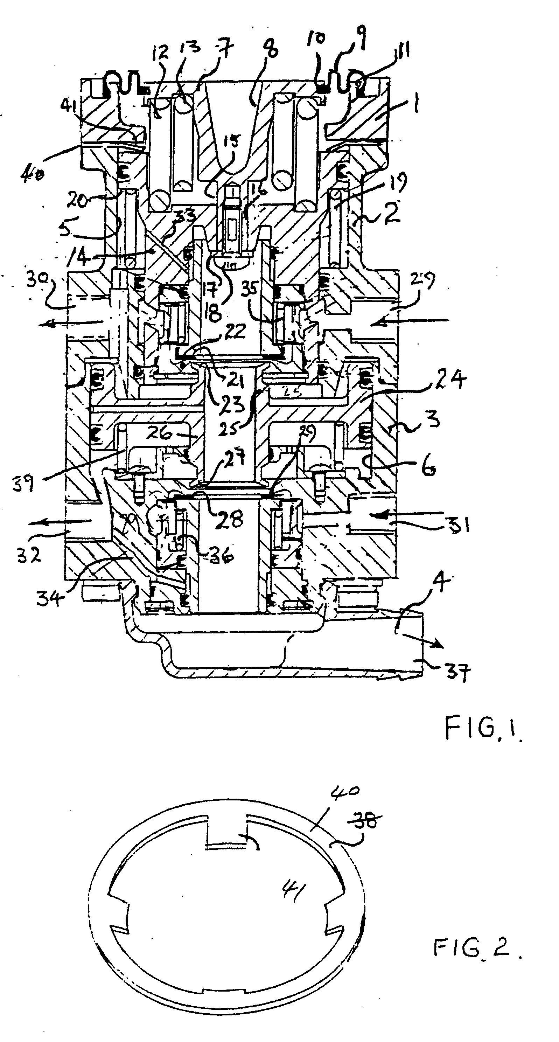

Referring to Fig. 1 the valve device shown therein comprises an housing formed of four parts 1, 2, 3 and 4 joined together by suitable bolts or other means. The upper end of the housing is provided with the first part denoted by reference 1, beneath which the generally cylindrical part 2 has a machined bore 5 to receive a pressure repsonsive member 14. Beneath part 2 the third part 3 has a machined bore 6 to receive a further pressure responsive member 24 and the lower end is closed by the fourth part 4 which comprises a vent cap. An input plunger denoted by reference 7 has a socket 8 for receiving an actuating stud or other member of a driver's foot pedal mechanism (not shown). The plunger 7 is sealingly moveable in the housing by virtue of a flexible annular diaphragm 9, located between a peripheral groove 10 of the plunger and an annular upstand 11 of the housing part 1.

Input forces applied to the plunger 7 by the foot pedal are transmitted via one or both of a pair of springs 12 and 13 to one side of the pressure responsive member 14 which comprises a piston slideable in the bore 5. The plunger 7 has a downwardly extending stem 15 which is freely slideable in a central axial bore 16 of the piston 14. The lower end of 15 carries a stop 17 retained by a central screw 18. A further spring 19 acts between housing part 2 and a shoulder 20 of the piston 14 in a direction to support the piston 14 against the springs 12 and 13. The piston 14 carries a lappable double valve assembly having a valve member 21 engageable with an inlet valve seat 22 carried by the piston itself and co-operable with an exhaust valve seat 23 carried by an upward projection 25 of the further pressure responsive member 24, in the form of a second piston. Piston 24 has a further downward projection 26 which carries a similar exhaust valve seat 27 of a further double valve assembly having a valve member 28 and an inlet valve seat 29 located in the body part 3.

The body part 2 is provided with a first fluid pressure supply port 29 and a first pressure delivery port 30 whereas the lower body part 3 is provided with a second pressure supply port 31 and second pressure delivery port 32.

The general construction of the valve assemblies comprising valve members 21 and 28 is conventional and need not be described in detail but it will be appreciated that pressure balancing for the valve members in the in lap positions is provided by small fluid pressure passages 33 and 34 communicating with the respective fluid pressure output ports 30 and 34, the valve members being suitably biassed towards their respective inlet valve seats 18 and 29 by light springs 35 and 36 respectively. A common vent passage for both valve assemblies is provided through the centre of the assembly to communicate with a common vent port 37 in the vent cap 4.

Clamped between the member part 1 and the body part 2 there is provided a generally annular member 40 which carries, as illustrated in Fig. 2, four inward projections such as 41 which provide a step against which the piston 14 rests in the unoperated or vented condition of the valve assemblies as shown. The member 40 is formed of a spring sheet material such as phosphor-bronze the thickness of which is chosen together with the dimensions of projection 41 to provide appropriate resilience and thereby permit a prescribed amount of upward deflection of 14 beyond a normal stop or rest position during venting.

In use of the valve assembly, the ports 29 and 31 are connected to separate charged compressed air reservoirs of a vehicle braking system and the ports 30 and 32 are connected to separate brake circuits of the vehicle. In the position shown the piston 14 rests in its normal stop position against the projections 41 of the member 40 and the plunger 7 is located in relation thereto by its stop 17 under the influence of spring 12. A prescribed socket clearance is, therefore, established between the socket 8 and the stud or other means (not shown) by which the plunger 7 is operated by the brake pedal mechanism. Due to the action of return springs 39 and 19, exhaust valve seats 21 and 27 will be at a rest position in which they are fixed distances from the respective valve members 18 and 28. The output ports 30 and 32 are thereby vented through these clearances to atmosphere, via the vent port 27. Initially the piston 12, therefore, rests in the position shown against projection 41. Upon operation of the driver's brake pedal mechanism by more than the socket clearance, the plunger 7 is moved downwards to exert a downward force via spring 12 and then 13 upon the piston 14 which, after closing the valve member 18 against the vent valve seat 23, causes downward movement of piston 24 to tend to close vent valve seat 27 against valve member 28. Further downward movement results in unseating of the valve member 21 from inlet valve seat 21 and unseating of valve member 28 from inlet valve seat 29. Fluid pressure is then applied above the piston 24 from the supply port 29, such pressure appearing at the delivery port 30 and also urging piston 24 downwards. The piston 24 and the valve assembly comprising member 28 and seats 27 and 29 then acts in the manner of a relay valve to supply air under pressure from port 31 to port 32. After the pressure accumulated on the underside of piston 14 has attained a balancing value the first double valve assembly moves into a lapping condition in relation to the seat 23, accompanied by similar lapping of the further valve assembly. In the lapping condition the respective double valve is in a stable state with both its inlet and exhaust passages closed by the respective valve member. The pressures at which the valve assemblies lap depend, of course, on the force applied via springs 12 and 13. Upon release following a reduction of the brake pedal force, venting commences by virtue initially of upward movement of piston 14. In the event of a complete release of pedal force on plunger7 the piston 14 moves towards its stop position against the projections 41 of member 40. Under the influence of the pressure acting under piston 14, the projections 41 and therefore the piston 14 are resiliently temporarily upwardly deflected beyond the normal stop position. The venting clearance between the valve member 21 and the vent valve seat 23 is thus temporarily increased to reduce the restriction which otherwise results from other constraints imposed upon this clearance. After release of the air pressure from the delivery port 30 via the upper valve, the downward force of resilience projections 41 is such as to return the piston 14 to the stop position shown. A prescribed clearance in thus restored between valve member 21 and seat 23.

In an alternative embodiment of the present invention a precise upper stop may be provided for the plunger such as 7 of Fig. 1 at its normal rest position whereas the annular member such as 40 may be omitted leaving a clearance above piston 14 in its normal position. The position of the upper stop for the plunger 7 is then so chosen that a prescribed clearance between the piston 14 and the first part of the body in Fig. 1 exists in the fully vented condition. During venting the piston 14 will then again be resiliently delfectable from its stop position due to the action of the air pressure being vented and the clearance between the first valve member 22 and its vent valve seat 23 will then again be temporarily increased as before.

## Claims

1. A fluid pressure control valve assembly comprising a body (2,3) housing a pressure responsive member (14 )for operating a lappable double valve arrangement, (21,22,23) alternatively displaceable from a lap position for connecting an output port (30) to a supply port (29) or a vent port (4), said pressure responsive member (14) being subject on one side to fluid pressure at the output port (39) and acting in a sense to tend to vent said pressure and urge said member (14) towards a stop (41) and being subject to an input force acting in an opposite sense to tend to connect the output port (39) to the supply port (29) and characterised by said stop (41) being resiliently deflectable beyond a normal stop position following removal of the input force thereby temporarily permitting said member (14) to increase the vent opening through said valve (21, 23).

2. A fluid pressure control valve assembly as claimed in claim 1 characterised by a plunger (7) and spring means (12, 13) via which said input force may be applied to said member (14).

3. A fluid pressure control valve assembly as claimed in claim 1 or 2 said housing including a first part (1) and a second part (2) within which the member (14) is slideable and characterised by said stop means comprising a resilient annular member retained between said first and second parts and having an inward projection (41) with which said member (14) is engageable in the normal stop position thereof.

4. A fluid pressure control valve as claimed in claim 1 including a plunger (7) and spring means (12, 13) via which said input force may be applied to said member (14) and characterised by said plunger having an upper stop at an unoperated rest position and said member (14) being deflectable beyond said normal stop against the spring means temporarily to increase the vent opening through said valve (21, 23).

**Revendications**

1. Ensemble de valve de commande de pression de fluide comprenant un corps (2, 3) contenant un élément (14) sensible à la pression, pour actionner un agencement de double valve à chevauchement (21, 22, 23), cet élément pouvant se déplacer de façon alternative depuis une position de chevauchement pour connecter un orifice d'échappement (30) à un orifice d'admission (29) ou à un orifice de mise à l'atmosphère (4), ledit élément sensible à la pression (14) étant soumis sur une face à la pression de fluide présente à l'orifice d'échappement (39) et qui agit dans une direction qui tend à relier ladite pression à l'atmosphère et à pousser ledit élément (14) vers une butée (41), et étant soumis à une force d'entrée qui agit dans une direction opposée et qui tend à connecter l'orifice d'échappement (39) à l'orifice d'admission (29), et caractérisé par le fait que ladite butée (41) est déformable de façon élastique au-delà d'une position d'arrêt normale à la suite de la suspension de la force d'entrée permettant ainsi temporairement audit membre (14) d'augmenter l'ouverture de mise à l'atmosphère à travers ladite valve (21, 23).

2. Ensemble de valve de commande de pression de fluide selon la revendication 1, caractérisé par un plongeur (7) et des ressorts (12, 13) par l'intermédiaire desquels ladite force d'entrée peut être appliquée audit élément (14).

3. Ensemble de valve de commande de pression de fluide selon la revendication 1 ou 2, dans lequel ledit boîtier comporte une première partie (1) et une deuxième partie (2) entre lesquelles ledit élément (14) peut se déplacer de façon coulissante, et caractérisé par le fait que ledit moyen d'arrêt comporte un élément annulaire élastique maintenu entre lesdites première et deuxième parties et ayant une saillie (41) dirigée vers l'intérieur et avec laquelle ledit élément (14) peut venir en contact dans sa position d'arrêt normale.

4. Ensemble de valve de commande de pression de fluide selon la revendication 1, comportant un plongeur (7) et des ressorts (12 et 13) par l'intermédiaire desquels ladite force d'entrée peut être appliquée audit élément (14), et caractérisé par le fait que ledit plongeur comporte une butée supérieure en position de repos et non-fonctionnement et que ledit élément (14) est déformable au-delà de ladite position d'arrêt normale en appui contre les ressorts pour augmenter de façon temporaire l'ouverture de mise à l'atmosphère à travers ladite valve (21, 23).

**Ansprüche**

1. Druckmittelsteuerventilvorrichtung, umfassend ein Gehäuse (2,3), welches einen auf Druck ansprechenden Teil (14) aufnimmt zum Betätigen einer überdeckbaren Doppelventilanordnung (21,22,23), die alternativ aus einer Mittelposition bzw. Überdeckposition verschiebbar ist zum Verbinden einer Austrittsöffnung (30) mit einer Zufuhröffnung (29) oder einer Entlüftungsöffnung (4), wobei der auf Druck ansprechende Teil (14) auf einer Seite dem Fluiddruck an der Austrittsöffnung (39) ausgesetzt ist und in einem Sinn wirkt, um das Bestreben hervorzurufen, den Druck zu entlüften und den genannten Teil (14) in Richtung gegen einen Anschlag (14) zu drücken, und weiterhin einer Eingangskraft ausgesetzt ist, die in entgegengesetztem Sinn wirkt, um das Bestreben hervorzurufen, die Austrittsöffnung (39) mit der Zufuhröffnung (29) zu verbinden, **dadurch gekennzeichnet,** daß der Anschlag (41) über eine normale Anhalteposition hinaus federnd auslenkbar ist nach dem Aufheben der Eingangskraft, um es dadurch dem genannten Teil (14) zeitweilig zu ermöglichen, die Entlüftungsöffnung durch das Ventil (21,23) hindurch zu vergrößern.

2. Druckmittelsteuerventilvorrichtung nach Anspruch 1, gekennzeichnet durch einen-Plunger (7) und eine Federeinrichtung (12,13), über welche die Eingangskraft an den genannten Teil (14) angelegt werden kann.

3. Druckmittelsteuerventilvorrichtung nach Anspruch 1 oder 2, wobei das Gehäuse einen ersten Teil (1) und einen zweiten Teil (2) aufweist, in welchem der genannte Teil (14) verschiebbar ist, dadurch gekennzeichnet, daß die Anschlageinrichtung einen federnden ringförmigen Teil aufweist, der zwischen dem ersten und dem zweiten Gehäuseteil gehalten ist und einen Einwärtsvorsprung (41) hat, mit welchem der genannte Teil (14) in der normalen Anhalteposition in Eingriff treten kann.

4. Druckmittelsteuerventil nach Anspruch 1, umfassend einen Plunger (7) und eine Federeinrichtung (12,13), über welche die Eingangskraft an den genannten Teil (14) angelegt werden kann, dadurch gekennzeichnet, daß der Plunger einen oberen Anschlag an einer nicht betätigten Ruheposition hat und der genannte Teil (14) über die normale Anhalteposition hinaus auslenkbar ist gegen die Federeinrichtung, um die Entlüftungsöffnung durch das Ventil (21,23) hindurch zeitweilig zu vergrößern.

FIG. 1.

FIG. 2.